(19) Europäisches Patentamt

European Patent Office

Office européen des brevets

(11) **EP 0 991 180 A2**

(12) **EUROPÄISCHE PATENTANMELDUNG**

(43) Veröffentlichungstag:
05.04.2000 Patentblatt 2000/14

(51) Int. Cl.⁷: **H02P 7/638**

(21) Anmeldenummer: **99117444.2**

(22) Anmeldetag: **15.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.09.1998 DE 19844830**

(71) Anmelder:
**AKO-Werke GmbH & Co. KG**
**88239 Wangen (DE)**

(72) Erfinder:
**Weinmann, Martin, Dipl.-Ing. (FH)**
**88339 Bad Waldsee (DE)**

(74) Vertreter:
**Hofmann, Gerhard, Dipl.-Ing.**
**Patentassessor**
**Stephanstrasse 49**
**90478 Nürnberg (DE)**

(54) **Verfahren und Schaltungsanordnung zur Drehzahlsteuerung von Gleichstrom-Universalmotoren**

(57) Es wird ein Verfahren sowie eine Schaltungsanordnung zur Drehzahlsteuerung von Gleichstrom-Universalmotoren (UM) vorgeschlagen, die eine kontinuierliche und stufenlose Feldschwächung des Motors ermöglichen, um den Motor jederzeit, d.h. insbesondere bei Drehzahlhochlauf auf hohe Drehzahlen, immer im optimalen Arbeitspunkt, also mit dem geringstmöglichen Ankerstrom betreiben zu können. Dies wird erfindungsgemäß dadurch erreicht, daß der Strom durch die Feldwicklung (1) mittels einer Stromabzweigung auf einen Betrag regelbar ist, der kleiner als der Strom durch den Anker (2) ist.

FIG.1

EP 0 991 180 A2

## Beschreibung

Die Erfindung betrifft ein Verfahren zur Drehzahlsteuerung von Gleichstrom-Universalmotoren, insbesondere von Gleichstrom-Universalmotoren mit großen Drehzahlbereichen, wie beispielsweise zum Antrieb von Waschmaschinen, nach dem Oberbegriff von Anspruch 1 sowie eine Schaltungsanordnung zur Durchführung des Verfahrens nach dem Oberbegriff von Anspruch 8. Unter einem Universalmotor ist hierbei ein Reihenschlußmotor, bei dem die stationäre Feldwicklung mit dem Anker elektrisch in Reihe geschaltet ist, zu verstehen.

Bei modernen Waschmaschinen muß der Motor einen großen Drehzahlbereich von langsamen Waschdrehzahlen bis hin zu hohen Schleuderdrehzahlen abdecken. Dies kann bekanntermaßen zum Beispiel durch eine Feldschwächung am Motor erreicht werden, indem die stationäre Feldwicklung des Motors von „langes Feld" auf „kurzes Feld" umgeschaltet wird, wie dies zum Beispiel in der DE 43 05 477 A1 der Anmelderin beschrieben ist.

Bei „langem Feld" arbeitet der Motor mit der vollen Feldwicklung, d.h. der Motorstrom fließt durch die gesamte Feldwicklung. Bei niedrigen Waschdrehzahlen von etwa 300 Motorumdrehungen pro Minute, wo bei geringer Motor-EMK ein hohes Drehmoment notwendig ist, wird der Motor deshalb mit „langem Feld" angesteuert. Dagegen wird bei „kurzem Feld" nur ein Teil der Feldwicklung bestromt, um dadurch bei gleichem Motorstrom einen geringeren Statorfluß und damit eine geringere Motor-EMK zu generieren. Bei hohen Schleuderdrehzahlen von beispielsweise etwa 12.000 Motorumdrehungen pro Minute, wo bei eigentlich großer Motor-EMK ein niedriges Drehmoment notwendig ist, wird der Motor mit „kurzem Feld" angesteuert.

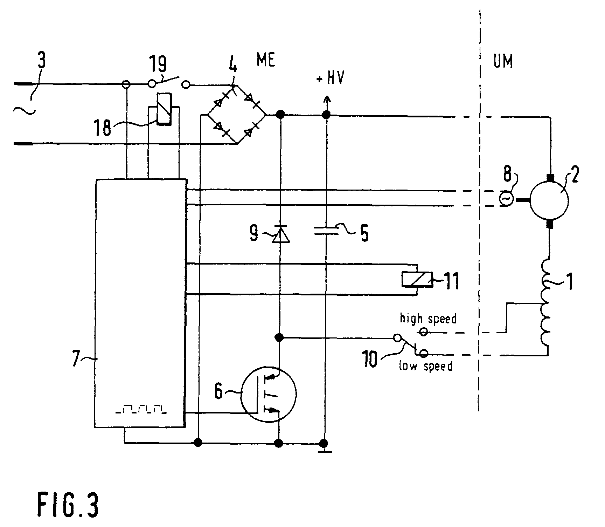

Eine derartige Steuerschaltung mit Feldumschaltung ist als Stand der Technik in Fig. 3 dargestellt.

Die die Drehzahl-Steuerschaltung ME speisende Wechselschaltung 3 wird über einen Gleichrichter 4 zur Speisung des Gleichstrom-Universalmotors UM gleichgerichtet. Der Gleichstrom-Universalmotor UM weist eine stationäre Feldwicklung 1 und einen rotierenden Anker 2 mit Kommutator auf, wobei die stationäre Feldwicklung 1 und der Anker 2 elektrisch in Reihe geschaltet sind (Gleichstrom-Universalmotor). Die gleichgerichtete Spannung, auch Zwischenkreisspannung +HV genannt, wird mit Hilfe eines Zwischenkreiskondensators 5 zumindest im Bereich der Taktfrequenz des Leistungsschalters 6 geglättet. Der Leistungsschalter 6, beispielsweise ein IGBT (Insulated Gate Bipolar Transistor), wird zur Regelung der Motorspannung und damit der Motordrehzahl mit einer elektronischen Regeleinrichtung 7 angesteuert. Ein an der Ankerwelle des Motors sitzender Tachogenerator 8 erfaßt hierzu den Ist-Wert der Motordrehzahl und gibt diesen an die Regeleinrichtung 7 weiter.

Die Drehzahl-Steuerschaltung ME regelt über die Regeleinrichtung 7 gemäß den gemessenen Ist-Werten der Motordrehzahl die Motorspannung auf die gewünschte Soll-Drehzahl. Die Motorspannung wird aus der Zwischenkreisspannung +HV gemäß dem Einschaltverhältnis des Leistungsschalters 6, der in Fig. 3 in der Topologie eines Choppers dargestellt ist, abgeleitet. Während der Einzeit des Leistungsschalters 6 liegt am Motor die Zwischenkreisspannung +HV an, während in der Auszeit des Leistungsschalters 6 der Motorstrom auf die Freilaufdiode 9 kommutiert und die an dem Motor anliegende Spannung damit gleich Null ist. Über das Einschaltverhältnis des Leistungsschalters 6 kann die Motorspannung zwischen Null und maximal der gleichgerichteten Zwischenkreisspannung +HV geregelt werden. Bei einer vorteilhaft gewählten Taktfrequenz des Leistungsschalters 6 oberhalb des hörbaren Bereiches (> 16 kHz) ergibt sich ein kontinuierlicher Motorstrom.

Zur Erweiterung des Drehzahlbereiches wird nach dem Stand der Technik beispielsweise die Feldwicklung 1 am Motor mit der Wirkung einer Feldschwächung über den elektrischen Schalter 10 mit Hilfe der Spule 11 umgeschaltet. Hierdurch können zum Beispiel hohe Schleuderdrehzahlen von über 10.000 Motordrehungen pro Minute erreicht werden. Ein Gleichstrom-Universalmotor mit einer solchen Feldumschaltung ist aber verhältnismäßig teuer.

Außerdem kann ein Gleichstrom-Universalmotor mit einer derartigen Schaltungsanordnung zur Feldschwächung entsprechend dem Schaltzustand des Relais 10 nur entweder mit „langem Feld" oder mit „kurzem Feld" betrieben werden.

In der DE 43 05 477 A1 wird deshalb zur Erweiterung des Drehzahlbereiches vorgeschlagen, die Betriebsspannung des Motors mit Hilfe von zwei in Reihe geschalteten Kondensatoren anstelle des nur einen Glättungskondensators 5 zu verdoppeln. Zur Verdopplung der Betriebsspannung schaltet die Regeleinrichtung 7 den Verbindungspunkt zwischen den beiden Kondensatoren mit Hilfe eines weiteren elektrischen Schalters an einen Abgriff des Gleichrichters 4.

Ferner ist aus der DE 196 45 667 A1 der Anmelderin eine weitere Möglichkeit zur Erweiterung des Drehzahlbereiches eines Gleichstrom-Universalmotors bekannt. In der darin offenbarten Schaltungsanordnung umfaßt die den Motor UM speisende Leistungsstufe ME eine Leistungsdrossel, und die Leistungsstufe ist von der Topologie eines Tiefsetzstellers auf die Topologie eines Hochsetzstellers umschaltbar. Durch diese Maßnahmen liegen die Motorspannungen nicht nur deutlich über der Zwischenkreisspannung +HV der Drehzahl-Steuerschaltung ME, sondern der Motor UM kann auch mit kleineren Strömen gespeist werden, so daß sich die Verlustleistungen in den Leistungsschaltern reduzieren und die damit geringere Strombelastung des Kommutators einen positiven Einfluß auf die Lebensdauer zur Folge hat.

Die in DE 43 05 477 A1 und DE 196 45 667 A1 offenbarten Schaltungsanordnungen zur Speisung von Gleichstrom-Universalmotoren ermöglichen allerdings nur eine Zweistufen-Regelung der Drehzahlen, d.h. den Betrieb des Motors mit entweder der „normalen" Motorspannung oder der verdoppelten bzw. erhöhten Motorspannung.

Ausgehend von dem genannten Stand der Technik ist es eine Aufgabe der Erfindung, ein Verfahren und eine Schaltungsanordnung zur Drehzahlsteuerung von Gleichstrom-Universalmotoren bereitzustellen, die eine kontinuierliche und stufenlose Feldschwächung des Motors ermöglichen, um den Motor jederzeit, d.h. insbesondere bei Drehzahlhochlauf auf hohe Drehzahlen, immer im optimalen Arbeitspunkt, also mit dem geringstmöglichen Ankerstrom betreiben zu können.

Diese Aufgabe wird durch ein Verfahren mit den Merkmalen des Anspruches 1 gelöst.

Erfindungsgemäß ist der durch die Feldwicklung fließende Strom auf einen Betrag regelbar, der kleiner als der durch den Anker fließende Strom ist. Hierdurch ist es möglich, den Motor bei Drehzahlhochlauf in jedem Betriebspunkt entsprechend der maximal möglichen Motorspannung mit der maximal möglichen Felderregung und damit dem minimal möglichen Strom durch den Anker zu betreiben, wodurch außerdem die Lebensdauer des Kommutators und damit die des Motors erhöht wird. Außerdem ist es hierdurch möglich, den Kupfereinsatz für die Feldwicklung zu reduzieren, da insbesondere im Bereich niedriger Drehzahlen der maximale Strom durch die Feldwicklung auf die magnetische Sättigungsgrenze des Stators begrenzt werden kann.

In einer Weiterbildung des Verfahrens ist der durch den Anker fließende Strom zwischen Anker und Feldwicklung abzweigbar, so daß nur ein Teil des durch den Anker fließenden Stromes durch die Feldwicklung fließt. Diese Stromabzweigung ermöglicht den Einsatz kostengünstigerer Motoren, da im Gegensatz zu den vorbekannten Schaltungsanordnungen die Anzapfung der Feldwicklung am Motor entfällt. Desweiteren ist die Bestromung der Feldwicklung auch im Feldschwächbetrieb symmetrisch, was einen so gering wie möglichen Streufluß bewirkt. Außerdem kann mit Hilfe der Stromabzweigung eine weitere Erhöhung der Drehzahl erreicht werden, da die Felderregung beliebig klein geregelt werden kann und nicht durch die vorbestimmte Anzapfung der Feldwicklung fest begrenzt ist.

Ferner ist vorzugsweise das Verhältnis von durch den Anker fließenden Strom zu durch die Feldwicklung fließenden Strom durch das Einschaltverhältnis eines Schaltmittels in der Stromabzweigung regelbar, insbesondere kontinuierlich regelbar.

Im Bereich hoher Drehzahlen wird vorteilhafterweise bei dauernd eingeschaltetem ersten Schaltmittel zum Zwecke der Feldschwächung das zweite Schaltmittel vorzugsweise mit einem Einschaltverhältnis größer als 50% getaktet wird. Außerdem ist es von Vorteil, im Bereich niedrigerer Drehzahlen zum Zwecke der Strombegrenzung durch die Feldwicklung das zweite Schaltmittel mit einem Einschaltverhältnis kleiner als 50% zu takten.

Weiter wird die oben genannte Aufgabe durch eine Schaltungsanordnung mit den Merkmalen des Anspruches 8 gelöst.

Die Schaltungsanordnung zur Steuerung der Drehzahl von Gleichstrom-Universalmotoren mit einer Feldwicklung und einem zu der Feldwicklung in Reihe geschaltetem Anker weist eine Leistungsstufe, umfassend ein erstes Schaltmittel und eine zu dem Schaltmittel in Reihe geschaltete Freilaufdiode, zur Regelung der an dem Motor anliegenden Spannung aus einer Zwischenkreisspannung und eine Regeleinrichtung zur Ansteuerung des ersten Schaltmittels auf, wobei erfindungsgemäß zwischen dem Anker und der Feldwicklung ein Abgriff für eine Stromabzweigung vorgesehen ist, so daß der Strom durch die Feldwicklung auf einen Betrag regelbar ist, der kleiner als der Strom durch den Anker ist.

Vorteilhafterweise wird die Stromabzweigung durch ein zweites Schaltmittel, welches parallel zu der Feldwicklung geschaltet ist, und eine zugehörige Freilaufdiode, welche antiparallel zu dem Anker geschaltet ist, gebildet. Über den so gebildeten Strom-Bypass ist es möglich, einen Teil des durch den Anker fließenden Stromes abzuzweigen.

Weitere Ausgestaltungen und Weiterbildungen der vorliegenden Erfindung sind Gegenstand weiterer Unteransprüche.

Die Erfindung wird im folgenden anhand eines bevorzugten Ausführungsbeispieles unter Bezugnahme auf die beiliegende Zeichnung näher erläutert. Darin zeigen:

Fig. 1 eine Schaltungsanordnung zur Drehzahlsteuerung eines Gleichstrom-Universalmotors gemäß der vorliegenden Erfindung;

Fig. 2 eine Schaltungsanordnung zur Drehzahlsteuerung eines Gleichstrom-Universalmotors von Fig. 1 in detaillierterer Darstellung; und

Fig. 3 eine Schaltungsanordnung zur Drehzahlsteuerung eines Gleichstrom-Universalmotors nach dem Stand der Technik.

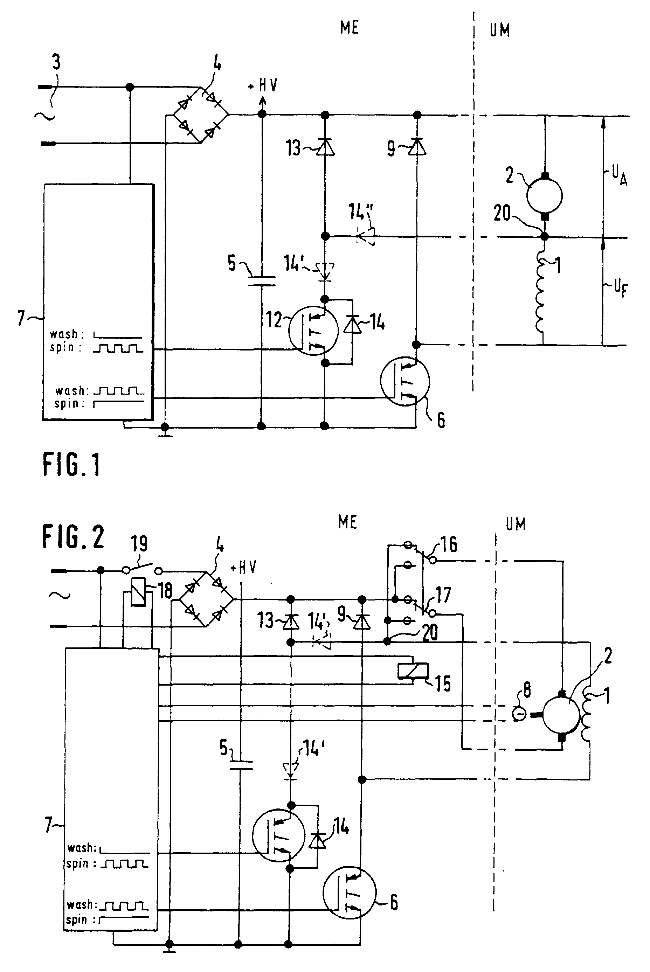

Die Fig. 1 und 2 zeigen ein bevorzugtes Ausführungsbeispiel einer Schaltungsanordnung zur Drehzahlsteuerung eines Gleichstrom-Universalmotors. Der Einfachheit halber werden in den Fig. 1 und 2 für gleiche Elemente die gleichen Bezugzeichen verwendet wie in der Schaltungsanordnung von Fig. 3 zum Stand der Technik. Bei dem Gleichstrom-Universalmotor UM handelt es sich um einen Reihenschlußmotor, bei dem die stationäre Feldwicklung 1 mit dem Anker 2 elektrisch in Reihe geschaltet ist.

Wie bei dem Stand der Technik gemäß Fig. 3 wird der Gleichstrom-Universalmotor UM von einer Drehzahl-Steuerschaltung ME gespeist. Die die Drehzahl-Steuerschaltung ME speisende Wechselschaltung 3 wird in bekannter Weise über einen Brückengleichrichter 4 aus vier Dioden gleichgerichtet. Die gleichgerichtete Zwischenkreisspannung +HV wird mit Hilfe eines Zwischenkreiskondensators 5 geglättet. Anstelle einer Wechselspannungsquelle 3 mit nachgeschaltetem Gleichrichter 4 kann selbstverständlich prinzipiell auch eine Gleichspannungsquelle zur Speisung der Drehzahl-Steuerschaltung ME eingesetzt werden.

Die Drehzahl-Steuerschaltung ME arbeitet, wie allgemein üblich, gemäß der Topologie eines Tiefsetzstellers. Die Drehzahl-Steuerschaltung ME regelt über eine Regeleinrichtung 7 die Motorspannung gemäß der Ist-Signale der Motordrehzahl auf die gewünschte Soll-Drehzahl. Die Ist-Werte der Motordrehzahl werden beispielsweise mittels eines an der Ankerwelle 2 des Motors angeordneten Tachogenerators 8 (siehe Fig. 2) erfaßt und der Regeleinrichtung 7 zugeführt. Grundsätzlich kann die aktuelle Motordrehzahl allerdings in einer beliebigen Art und Weise ermittelt werden.

Die Ansteuerung des Universalmotors UM erfolgt wie bei dem in Fig. 3 dargestellten Stand der Technik über einen Leistungsschalter 6 mit Freilaufdiode 9 in der Topologie eines Choppers. Als Leistungsschalter 6 wird beispielsweise ein IGBT (Insulated Gate Bipolar Transistor) oder ein MOSFET-Transistor eingesetzt. Anstelle der vorbekannten Anzapfung der Feldwicklung 1 wird durch einen Abgriff 20 zwischen dem Anker 2 und der Feldwicklung 1 eine Stromabzweigung geschaffen, die im konkreten Ausführungsbeispiel in Form eines Strom-Bypasses ausgebildet ist. Dieser Strom-Bypass besteht aus einem zweiten Leistungsschalter 12 mit zugehöriger Freilaufdiode 13, wobei der zweite Leistungsschalter 12 der Reihenschaltung aus Feldwicklung 1 und erstem Leistungsschalter 6 parallel und die Freilaufdiode 13 dem Anker 2 antiparallel geschaltet ist. Als zweiter Leistungsschalter 12 kann wiederum beispielsweise ein IGBT oder ein MOSFET eingesetzt werden.

Diese Stromabzweigung 20 ermöglicht den Einsatz kostengünstigerer Motoren, da im Gegensatz zu den vorbekannten Schaltungsanordnungen die Anzapfung der Feldwicklung 1 am Motor entfällt. Außerdem ist es möglich, den Kupfereinsatz für die Feldwicklung 1 zu reduzieren, da - wie weiter unten beschrieben - der maximale Strom durch die Feldwicklung 1 auf die magnetische Sättigungsgrenze des Stators begrenzt werden kann.

Ferner ist es durch diese Maßnahme möglich, die Lebensdauer des Kommutators und damit des Motors zu erhöhen, da der Motor bei Drehzahlhochlauf in jedem Betriebspunkt entsprechend der maximal möglichen Motorspannung mit der maximal möglichen Felderregung und damit dem minimal möglichen Strom durch den Anker 2 betrieben werden kann. Desweiteren ist die Bestromung der Feldwicklung 1 auch im Feldschwächbetrieb symmetrisch, was einen so gering wie möglichen Streufluß bewirkt.

Außerdem kann mit Hilfe der Stromabzweigung 20 eine weitere Erhöhung der Drehzahl erreicht werden, da die Felderregung beliebig klein geregelt werden kann und nicht durch die vorbestimmte Anzapfung der Feldwicklung 1 fest begrenzt ist, welche beim Stand der Technik einen Kompromiß zwischen dem maximalen Motorstrom nach der Umschaltung und der maximal zu erreichenden Drehzahl darstellt.

Im Bereich niedriger Drehzahlen, wie beispielsweise für den Waschvorgang bei Waschmaschinen, von zum Beispiel etwa 300 Motorumdrehungen pro Minute, wird der Universalmotor UM in an sich bekannter Weise durch Ansteuerung des ersten Leistungsschalters 6 mit Freilaufdiode 9 geregelt. Dies bedeutet, daß die Motorspannung aus der Zwischenkreisspannung +HV gemäß dem Einschaltverhältnis des Leistungsschalters 6 abgeleitet wird, während der zweite Leistungsschalter 12 dauernd ausgeschaltet ist. Während der Einzeit des Leistungsschalters 6 liegt am Motor UM die Zwischenkreisspannung +HV an, während in der Auszeit des Leistungsschalters 6 der Motorstrom auf die Freilaufdiode 9 kommutiert und die an dem Motor anliegende Spannung $U_{UM}$ damit gleich Null ist. In diesem Drehzahlbereich unterhalb der Sättigungsgrenze des Motors ist der zweite Leistungsschalter 12 dauernd ausgeschaltet, so daß der Motorstrom analog zu Fig. 3 nur auf die Freilaufdiode 9 kommutiert, da der durch den Anker 2 fließende Strom und der durch die Feldwicklung 1 fließende Strom gleich sind.

Wenn mit dem Universalmotor UM hohe Drehzahlen erreicht werden sollen und bereits die volle Zwischenkreisspannung +HV am Motor anliegt, d.h. wenn der erste Leistungsschalter 6 dauernd eingeschaltet ist, kann die Motordrehzahl bei vorgegebener Zwischenkreisspannung +HV nur durch eine Feldschwächung weiter erhöht werden. Dies wird erfindungsgemäß dadurch erreicht, daß zumindest ein Teil des durch den Anker 2 fließenden Stromes nicht durch die Feldwicklung 1 fließt, sondern zwischen Anker 2 und Feldwicklung 1 am Abgriff 20 abgezweigt wird und über den aus dem zweiten Leistungsschalter 12 und der Diode 13 gebildeten Strom-Bypass abfließt.

Die Größe des abgezweigten Stromes und damit auch die Größe des verringerten, noch durch die Feldwicklung 1 fließenden Stromes ergibt sich bei dauernd eingeschaltetem ersten Leistungsschalter 6 aus dem Einschaltverhältnis $d_2$ (Ein/Aus) des zweiten Leistungsschalters 12. Bei eingeschaltetem zweiten Leistungsschalter 12 liegt am Anker 2 die gesamte Zwischenkreisspannung +HV an. Bei ausgeschaltetem Leistungsschalter 12 liegt die Zwischenkreisspannung +HV an der Feldwicklung 1 an, weil ein Teil des durch den Anker 2 fließenden Stromes auf die Freilaufdiode 13 des Strom-Bypasses kommutiert und damit den Abgriff 20 zwischen Anker 2 und Feldwicklung 1 auf den positiven Pol der Zwischenkreisspannung klemmt. Das

Einschaltverhältnis $d_2$ des zweiten Leistungsschalters 12 bestimmt also das Verhältnis von Ankerspannung $U_A$ zu Feldspannung $U_F$

Bei hohen Drehzahlen, wie beispielsweise im Schleuderbetrieb einer Waschmaschine, d.h. wenn der erste Leistungsschalter 6 auf Dauer eingeschaltet ist und der Strom durch die Feldwicklung 1 zum Zwecke der Feldschwächung auf kleinere Werte geregelt wird als der Strom durch den Anker 2, ergibt sich die am Anker 2 anliegende Spannung $U_A$ zu:

$$U_A = d_2 \cdot (+HV).$$

Die an der Feldwicklung 1 anliegende Spannung $U_F$ ergibt sich dementsprechend zu:

$$U_F = (1 - d_2) \cdot (+HV).$$

Bei hohen Drehzahlen, bei denen der Universalmotor UM im Feldschwächbereich betrieben wird, wird typischerweise ein großes Einschaltverhältnis $d_2$ von über 50%, vorzugsweise von bis zu über 80% für den zweiten Leistungsschalter 12 des Strom-Bypasses eingestellt, so daß die am Anker 2 anliegende Spannung $U_A$ um ein vielfaches größer ist als die an der Feldwickdung 1 anliegende Spannung $U_F$. Dementsprechend ist auch der durch den Anker 2 fließende Strom um ein vielfaches größer als der durch die Feldwicklung 1 fließende Strom.

Da das Einschaltverhältnis $d_2$ des zweiten Leistungsschalters 12 kontinuierlich veränderbar ist, ist auch das Verhältnis von Ankerspannung $U_A$ zu Feldspannung $U_F$ und somit folglich auch das Verhältnis von durch den Anker 2 fließenden Strom zu durch die Feldwicklung 1 fließenden Strom, sowie die Feldschwächung kontinuierlich regelbar. Hierdurch kann der Universalmotor UM bei Drehzahlhochlauf in jedem Betriebspunkt entsprechend der maximal möglichen Motorspannung mit der maximal möglichen Felderregung betrieben werden. Außerdem ist eine Drebzahlerhöhung auf beliebige Drehzahlen bis zu einer bestimmten Maximaldrehzahl möglich, da die Drehzahl nicht durch die vorbestimmte Anzapfung der Feldwicklung 1 festgelegt ist.

Zusätzlich kann in der Drehzahl-Steuerschaltung ME eine Schutzdiode 14 vorgesehen sein, falls der zweite Leistungsschalter 12 vor Reversspannungen geschützt werden muß. Solche Reversspannungen können beispielsweise am Leistungsschalter 12 auftreten, wenn die Motor-EMK größer als die Zwischenkreisspannung +HV ist.

Eine solche Schutzdiode 14 kann beispielsweise antiparallel zu dem zweiten Leistungsschalter 12 angeordnet sein. Bei der Verwendung eines MOSFET-Transistors als zweitem Leistungsschalter 14 ist diese Schutzdiode 14 bereits auf dem Silizium integriert. Die Schutzdiode kann alternativ auch in Reihe mit dem zweiten Leistungsschalter 12 geschaltet werden, wie dies in Fig. 1 und 2 mit 14' und 14" angedeutet ist.

In Fig. 2 sind zusätzlich zur Vervollständigung der Schaltungsanordnung der Drehzahl-Steuerschaltung ME ein Wenderelais 15 mit den zugehörigen Schaltkontakten 16 und 17 zur Drehrichtungssteuerung des Universalmotors UM mittels Stromrichtungsumkehr im Anker 2, der Tachogenerator 2 zur Erfassung der aktuellen Drehzahl des Ankers 2 und ein Stromlosrelais 18 mit Schaltkontakt 19 zur Sicherheitsabschaltung des Universalmotors UM dargestellt.

Gemäß der obigen Beschreibung wird der Universalmotor UM bei hohen Drehzahlen mittels der Stromabzweigung bzw. des Strom-Bypasses mit Feldschwächung betrieben Der Universalmotor UM wird dann im niedrigen Drehzahlbereich ohne Feldschwächung betrieben, indem der Motor über den ersten Leistungsschalter 6 mit Freilaufdiode 9 wie nach dem Stand der Technik betrieben wird.

Aber auch in diesem unteren Drehzahlbereich kann es bei hohen Drehmomenten und damit hohen Strömen wünschenswert sein, den Strom durch die Feldwicklung 1 auf kleinere Beträge zu regeln als den durch den Anker 2 fließenden Strom. Dies kann zum Beispiel der Fall sein, wenn sich der Stator des Motors mit der Feldwicklung 1 schon weit in der magnetischen Sättigung befindet und durch die Erhöhung des Stromes durch die Feldwicklung sich der daraus resultierende magnetische Fluß nur noch minimal ändert, aber dafür die Verlustleistung in der Feldwicklung 1 aufgrund des ohmschen Widerstandes der Feldwicklung weiter quadratisch mit dem Strom ansteigen wurde. Durch die Begrenzung des Stromes durch die Feldwicklung 1 auf einen durch die magnetische Sättigungsgrenze des Stators vorbestimmten Wert könnte die Feldwicklung 1 beispielsweise mit einem dünneren Drahtdurchmesser und somit kostengünstiger ausgebildet werden.

Ab einem vorbestimmten Motorstrom, der der Sättigungsgrenze des Stators entspricht, würde dann der Strom-Bypass mit Leistungsschalter 12 und Freilaufdiode 13 aktiviert werden. In diesem Betriebsbereich wird der zweite Leistungsschalter 12 allerdings mit einem kleineren Einschaltverhältnis $d_2$ von der Regeleinrichtung 7 geregelt werden. Es ergeben sich dann analog die Verhältnisse wie oben für hohe Drehzahlen mit Feldschwächung beschrieben.

Während der Einzeit beider Leistungsschalter 6 und 12 liegt die Zwischenkreisspannung +HV am Anker 2 an, während bei ausgeschaltetem zweiten Leistungsschalter 12 während der Einzeit des ersten Leistungsschalters 6 die Zwischenkreisspannung +HV an der Feldwicklung 1 anliegt. Während der Auszeit beider Leistungsschalter 6 und 12 kommutiert der durch die Feldwicklung 1 fließende Strom auf die Freilaufdiode 9 und der durch den Anker 2 fließende Strom abzüglich des durch die Feldwicklung 1 fließenden Stromes auf die Freilaufdiode 13. Falls der zweite Leistungsschalter 12 auf Dauer ausgeschaltet ist, kommutiert der Motorstrom wie beim Stand der Technik gemäß Fig. 3 nur auf die Freilaufdiode 9, da der durch den Anker 2 fließende Strom und der durch die Feldwicklung 1 fließende Strom gleich sind.

Falls bei niedrigen Drehzahlen auch der zweite Leistungsschalter 12 getaktet wird, um den durch die Feldwicklung fließenden Strom auf einen auf die Sättigungsgrenze des Stators bezogenen Wert zu begrenzen, und der durch den Anker 2 fließende Strom größer ist als der durch die Feldwicklung 1 fließende Strom, ergibt sich für die Ankerspannung $U_A$ und die Feldspannung $U_F$:

$$U_A = d_2 \cdot (+HV)$$

$$U_F = (d_1 - d_2) \cdot (+HV),$$

wobei $d_1$ das Einschaltverhältnis des ersten Leistungsschalters 6 mit $d_2 < d_1 < 1$ ist. In diesem Fall wird ein niedrigeres Einschaltverhältnis $d_2$ des zweiten Leistungsschalters 12 von vorzugsweise unter 50% gewählt.

**Patentansprüche**

1. Verfahren zur Steuerung der Drehzahl von Gleichstrom - Universalmotoren (UM) mit einer Feldwicklung (1) und einem mit der Feldwicklung (1) in Reihe geschaltetem Anker (2), wobei die Betriebsspannung des Motors aus einer Zwischenkreisspannung (+HV) mittels eines ersten Schaltmittels (6) geregelt wird,
dadurch gekennzeichnet,
daß der Strom durch die Feldwicklung (1) auf einen Betrag regelbar ist, der kleiner als der Strom durch den Anker (2) ist.

2. Verfahren nach Anspruch 1,
dadurch gekennzeichnet,
daß der durch den Anker (2) fließende Strom zwischen Anker (2) und Feldwicklung (1) abzweigbar ist, so daß nur ein Teil des durch den Anker (2) fließenden Stromes durch die Feldwicklung (1) fließt.

3. Verfahren nach Anspruch 1 oder 2,
dadurch gekennzeichnet,
daß das Verhältnis von durch den Anker (2) fließenden Strom zu durch die Feldwicklung (1) fließenden Strom durch das Einschaltverhältnis ($d_2$) eines zweiten Schaltmittels (12) regelbar ist.

4. Verfahren nach Anspruch 3,
dadurch gekennzeichnet,
daß das Verhältnis von durch den Anker (2) fließenden Strom zu durch die Feldwicklung (1) fließenden Strom durch das Einschaltverhältnis ($d_2$) des zweiten Schaltmittels (12) kontinuierlich regelbar ist.

5. Verfahren nach einem der vorhergehenden Ansprüche,
dadurch gekennzeichnet,
daß bei dauernd eingeschaltetem ersten Schaltmittel (6) zum Zwecke der Feldschwächung das zweite Schaltmittel (12) getaktet wird.

6. Verfahren nach Anspruch 5,
dadurch gekennzeichnet,
daß das Einschaltverhältnis ($d_2$) des zweiten Schaltmittels (12) größer als 50% ist.

7. Verfahren nach einem Ansprüche 1 bis 4,
dadurch gekennzeichnet,
daß zum Zwecke der Strombegrenzung durch die Feldwicklung das zweite Schaltmittel (12) mit einem Einschaltverhältnis ($d_2$) kleiner als 50% getaktet wird.

8. Schaltungsanordnung zur Steuerung der Drehzahl von Gleichstrom-Universalmotoren (UM) mit einer Feldwicklung (1) und einem Anker (2), wobei die Feldwicklung (1) und der Anker (2) elektrisch in Reihe geschaltet sind, mit einer Leistungsstufe, umfassend ein Schaltmittel (6) und eine zu dem Schaltmittel in Reihe geschaltete Freilaufdiode (5), zur Regelung der an dem Motor (UM) anliegenden Spannung aus einer Zwischenkreisspannung (+HV) und einer Regeleinrichtung (7) zur Ansteuerung des Schaltmittels (6),
dadurch gekennzeichnet,
daß zwischen dem Anker (2) und der Feldwicklung (1) ein Abgriff (20) für eine Stromabzweigung vorgesehen ist, so daß der Strom durch die Feldwicklung (1) auf einen Betrag regelbar ist, der kleiner als der Strom durch den Anker (2) ist.

9. Schaltungsanordnung nach Anspruch 8,
dadurch gekennzeichnet,
daß die Stromabzweigung ein zweites Schaltmittel (12) aufweist, welches parallel zu der Feldwicklung (1) geschaltet ist.

10. Schaltungsanordnung nach Anspruch 9,
dadurch gekennzeichnet,
daß die Stromabzweigung weiter eine Freilaufdiode (13) aufweist, welche antiparallel zu dem Anker (2) geschaltet ist.

11. Schaltungsanordnung nach Anspruch 9 oder 10,
dadurch gekennzeichnet,
daß die Stromabzweigung weiter eine Schutzdiode (14, 14', 14'') aufweist, welche antiparallel oder in Reihe zu dem zweiten Schaltmittel (12) geschaltet ist.

12. Schaltungsanordnung nach einem der Ansprüche 9 bis 11,
dadurch gekennzeichnet,

daß das zweite Schaltmittel (12) ein IGBT ist.

13. Schaltungsanordnung nach einem der Ansprüche 8 bis 12, dadurch gekennzeichnet, daß die Schaltungsanordnung einen Tachogenerator zur Erfassung der aktuellen Drehzahl des Motors aufweist.

FIG.1

FIG.2

FIG.3